**Europäisches Patentamt**

**European Patent Office**

**Office européen des brevets**

(19)

(11) Numéro de publication: **0 116 807**
**A1**

(12) # DEMANDE DE BREVET EUROPEEN

(21) Numéro de dépôt: **83450003.5**

(22) Date de dépôt: **21.02.83**

(51) Int. Cl.³: **G 01 B 21/04**
**G 01 B 3/00, F 16 P 3/14**
**B 23 Q 5/58**

(43) Date de publication de la demande:
**29.08.84 Bulletin 84/35**

(84) Etats contractants désignés:
**BE CH DE FR GB IT LI NL SE**

(71) Demandeur: **GAME INGENIERIE Société Anonyme**
**22 boulevard Saint Martin**
**F-33600 Pessac(FR)**

(72) Inventeur: **Chevrier, René**
**13, Les Prés de l'Eglise Pompignac**
**F-33370 Tresses(FR)**

(74) Mandataire: **Thébault, Jean-Louis**
**Cabinet Jean-Louis Thébault 50, Cours de Verdun**
**F-33000 Bordeaux(FR)**

(54) **Coulisseau mobile suivant au moins deux axes orthogonaux et portant une tête de mesure, contrôle, usinage, préhension ou analogue.**

(57) L'invention concerne un coulisseau monté mobile suivant un premier axe vertical sur un chariot porteur mobile suivant au moins un second axe orthogonal au premier et portant une tête de mesure, contrôle, usinage, préhension ou analogue, caractérisé en ce qu'il comporte une barrière optique (14) enveloppant tout ou partie de la périphérie du bras (6) constituant ledit coulisseau et constituée d'une source de lumière visible ou invisible (13) solidaire du chariot (5), d'une surface catadioptrique (15) de conformation appropriée, fixée sur l'extrémité du bras (6) portant la tête active (7) et de moyens récepteurs du rayonnement réfléchi par ladite surface catadioptrique (15) en sorte d'envelopper totalement ou partiellement le bras de faisceaux électromagnétiques dont le franchissement par un objet quelconque est automatiquement détecté en vue de commander l'arrêt du déplacement dans l'espace du coulisseau (6).

./...

EP 0 116 807 A1

FIG.1.

- 1 -

COULISSEAU MOBILE SUIVANT AU MOINS DEUX AXES
ORTHOGONAUX ET PORTANT UNE TÊTE DE MESURE,
CONTRÔLE, USINAGE, PRÉHENSION OU ANALOGUE

La présente invention se rapporte à un coulisseau mobile suivant au moins deux axes orthogonaux et portant une tête sur laquelle est monté un dispositif notamment de mesure, de contrôle, d'usinage, de préhension d'objet, et, d'une manière générale, tout dispositif appelé à opérer vis-à-vis d'un objet ou d'objets quelconques une fonction quelconque nécessitant des déplacements et des positionnements déterminés de ladite tête relativement auxdits objets.

L'invention va être décrite dans son application particulière à la mesure tridimensionnelle mais il est bien évident qu'elle couvre également toute autre application mettant en oeuvre un coulisseau mobile pour lequel se posent des problèmes analogues de sécurité et de protection.

Le but de l'invention est en effet, en particulier dans le cadre de l'application à un banc de mesure tridimensionnelle comportant une tête de mesure montée à l'extrémité d'un bras ou coulisseau mobile verticalement sur un chariot-support lui-même mobile suivant deux axes orthogonaux horizontaux, de proposer une structure de montage et protection de ladite tête et de son bras porteur susceptible d'éviter toute rencontre dudit bras avec un objet intrus quelconque se trouvant sur la trajectoire du bras, tout accostage intempestif de la tête et également d'éviter éventuellement tout endommagement de l'objet à mesurer placé sur le banc.

A cet effet, l'invention a pour objet un coulisseau monté mobile suivant un premier axe vertical sur un chariot porteur mobile suivant au moins un second axe orthogonàl au premier et portant une tête de mesure, contrôle, usinage, préhension ou analogue, caractérisé en ce qu'il comporte une barrière optique enveloppant tout ou partie de la périphérie du bras constituant ledit coulisseau et constituée d'une source de lumière visible ou invisible solidaire du chariot, d'une surface catadioptrique de conformation appropriée, fixée sur l'extrémité du bras portant la tête active et de moyens récepteurs du rayonnement réfléchi par ladite surface catadioptrique en sorte d'envelopper totalement ou partiellement le bras de faisceaux électromagnétiques dont le franchissement par un objet quelconque est automatiquement détecté en vue de commander l'arrêt du déplacement dans l'espace du coulisseau.

Suivant un mode de réalisation ladite barrière optique est formée à partir d'un rayonnement infra - rouge pulsé, enveloppant totalement le bras, en présentant un contour polygonal et est constitué de rideaux plans étroits s'étendant chacun sur une largeur déterminée, ladite surface catadioptrique étant constituée de tronçons de bandes réfléchissantes délimitant un contour polygonal correspondant, cependant que lesdits moyens récepteurs, solidaires des émetteurs, sont fixés sur le chariot.

Suivant une autre caractéristique de l'invention, le coulisseau comporte avantageusement, en outre, un dispositif de montage souple de la tête active assurant à cette dernière une certaine raideur nécessaire aux mesures mais permettant, lorsque la pression d'accostage de la tête dépasse un certain seuil, de supprimer ladite raideur en vue de redonner à la tête une grande sensibilité aux mouvements pendulaires facilitant le retour en bonne position.

Suivant encore une autre caractéristique le coulisseau est monté sur le chariot porteur en suspension grâce à un système d'équilibrage permettant de compenser en permanence une grande partie au moins du poids du coulisseau et de sa tête active, automatiquement, sur toute la course utile verticale du coulisseau sur son chariot.

On va décrire maintenant un mode de réalisation d'un coulisseau conforme à l'invention et comportant une barrière optique de sécurité, un dispositif de montage souple à raideur variable de la tête active et un dispositif de compensation partielle du poids du coulisseau, cette description n'étant donnée qu'à titre illustratif de l'invention et en regard des dessins annexés sur lesquels :

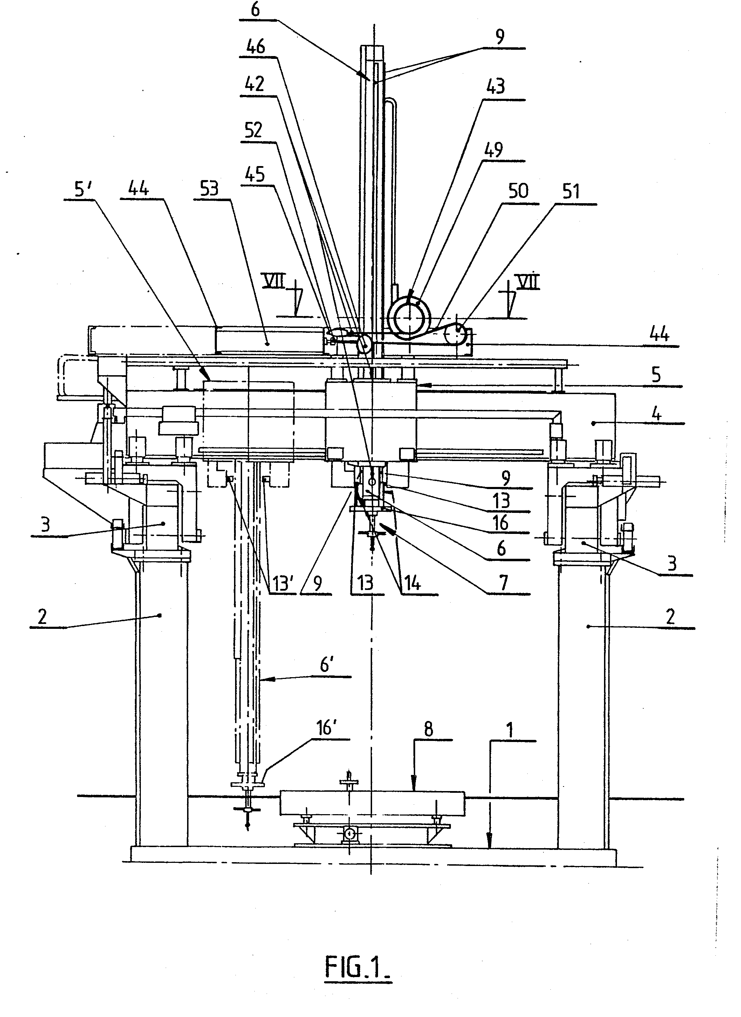

.- Fig.1 représente une vue en élévation latérale d'un banc de mesure tridimensionnelle comportant un coulisseau porte-tête de mesure mobile verticalement, conforme à l'invention ;

- Fig. 2 représente une vue de gauche du dispositif de la Fig. 1;

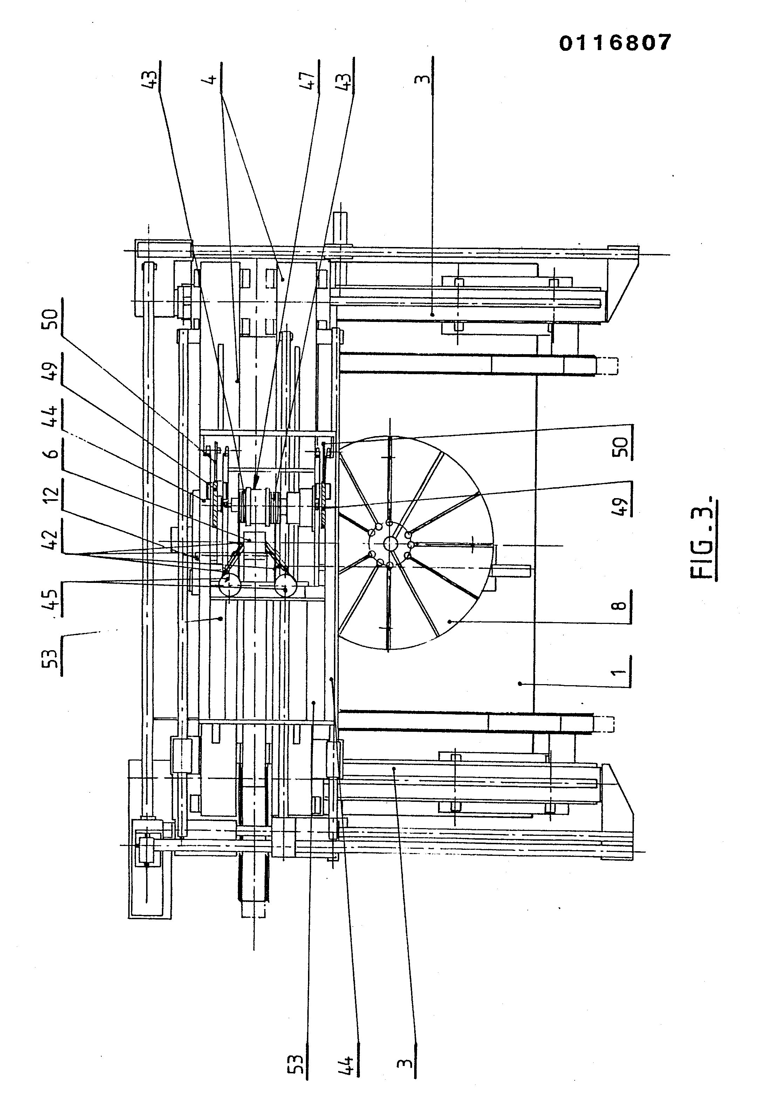

- Fig. 3 représente une vue de dessus du dispositif de la Fig. 1 ;

- Fig. 4 représente une vue en coupe verticale axiale de l'extrémité inférieure du coulisseau avec sa tête de mesure ;·

- Fig. 5 représente une vue en coupe horizontale suivant la ligne V-V du dispositif de la Fig. 4;

- Fig. 6 représente une vue partielle en coupe suivant la ligne VI-VI d'un détail de réalisation du dispositif de montage de la tête de mesure sur le coulisseau, et

- Fig. 7 est une coupe horizontale suivant la ligne VII-VII du dispositif de la Fig. 1, illustrant les moyens d'équilibrage du bras du coulisseau.

Sur les dessins on a représenté (Fig. 1) schématiquement un banc de mesure tridimensionnelle comprenant un socle horizontal 1 supportant quatre colonnes verticales 2 portant elle-mêmes deux poutres horizontales parallèles 3 sur lesquelles se déplacent deux poutres 4 horizontales, parallèles et solidaires.

Les poutres 4 supportent un chariot 5 mobile parallèlement aux poutres 4 et portant lui-même un coulisseau vertical 6 mobile verticalement sur le chariot 5 et dont l'extrémité inférieure porte une tête de mesure 7 susceptible de mesurer ou contrôler une pièce quelconque préalablement arrimée sur un plateau horizontal tournant 8 monté sur le socle 1.

Le coulisseau 6 est constitué d'un bras parallélépipédique en granit à faces parfaitement usinées sur lesquelles sont rapportés des rails de guidage 9 coopérant avec des patins à galets (non représentés) portés par le chariot 5. Ce dernier est disposé à cheval sur les deux poutres jumelles 4 et supporte le bras 6 de façon que ce dernier se déplace à la verticale entre les deux poutres 4.

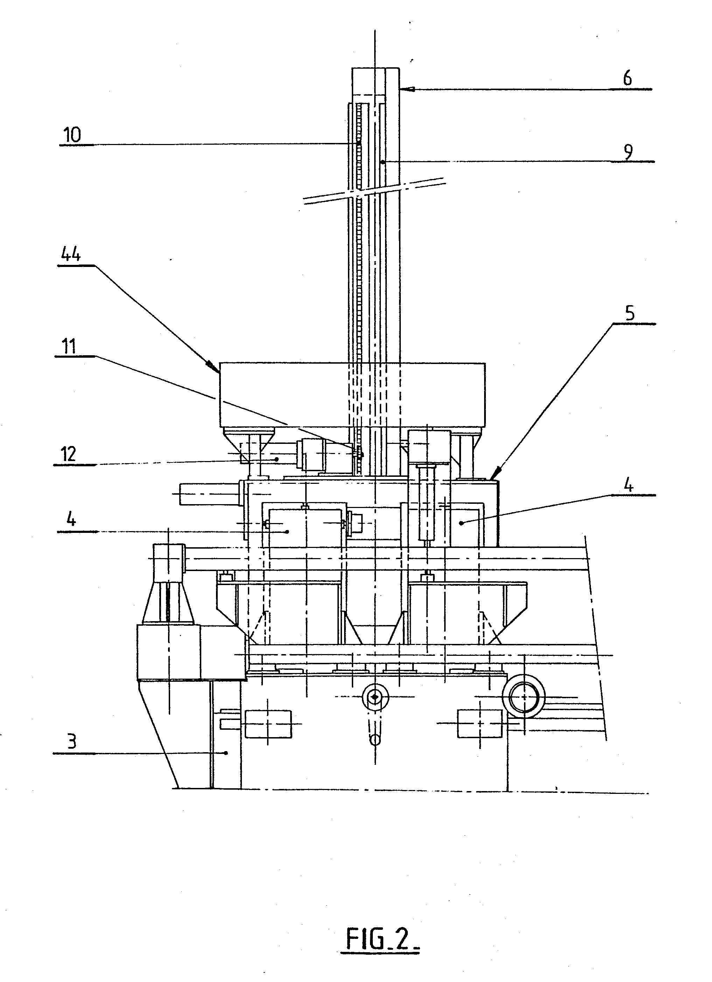

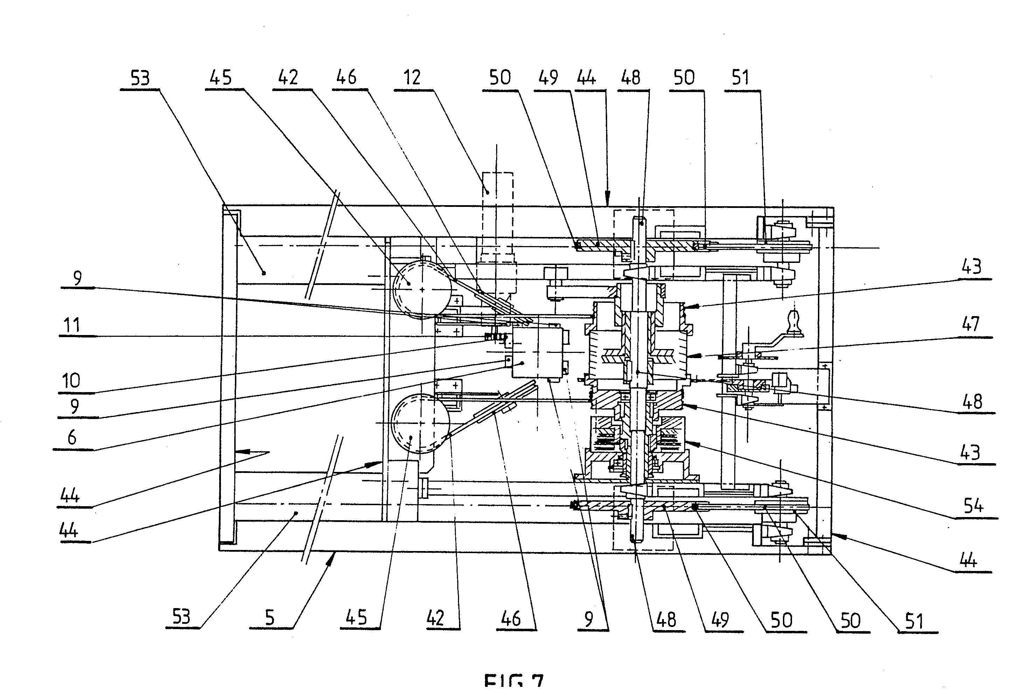

Les quatre faces latérales du bras 6 portent des rails de guidage 9, cependant qu'une des faces est munie d'une crémaillère verticale 10 en prise avec un pignon moteur 11 entraîné par un moteur électrique 12 à courant continu, fixé au chariot 5 (Fig. 2 et 7).

Sur la face inférieure du chariot 5 au voisinage du bras 6 et en regard des quatre faces de ce dernier, sont fixés quatre dispositifs 13 formant quatre rideaux optiques symbolisés en 14 sur les dessins, entourant complètement le bras 6 et formant un manchon parallèle à ce dernier.

Chaque dispositif 13 est par exemple une source de rayonnement infra-rouge pulsé générant un faisceau de balayage vertical se déplaçant parallèlement à lui-même sur une certaine distance définissant la largeur du rideau optique.

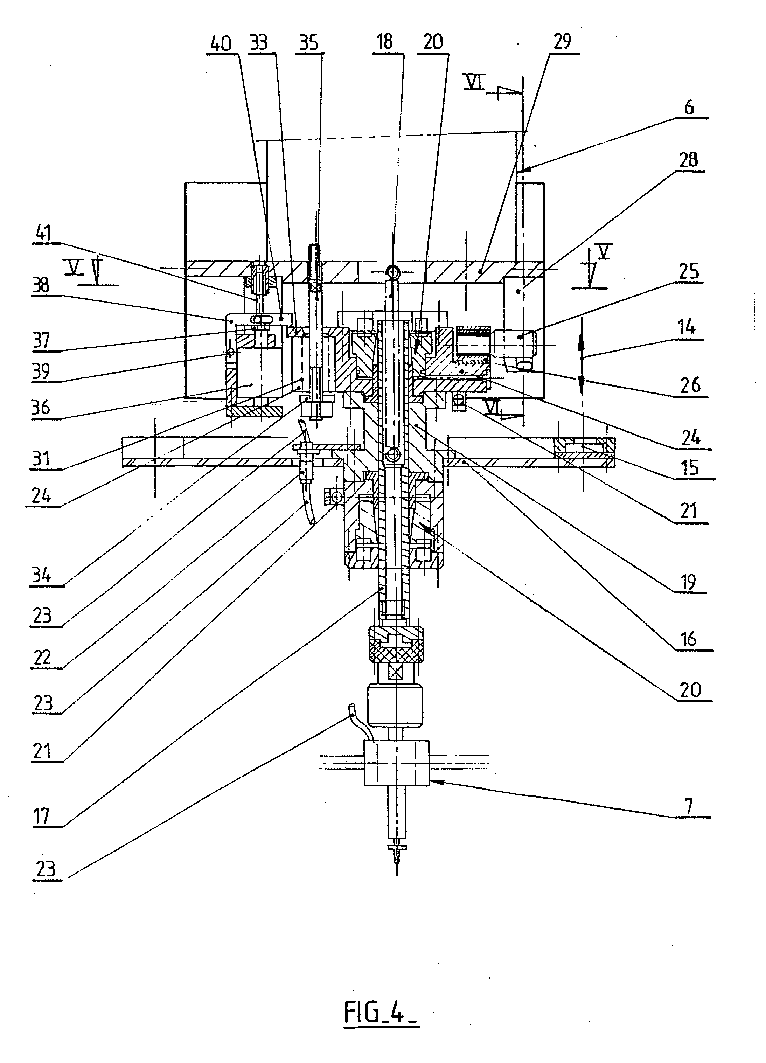

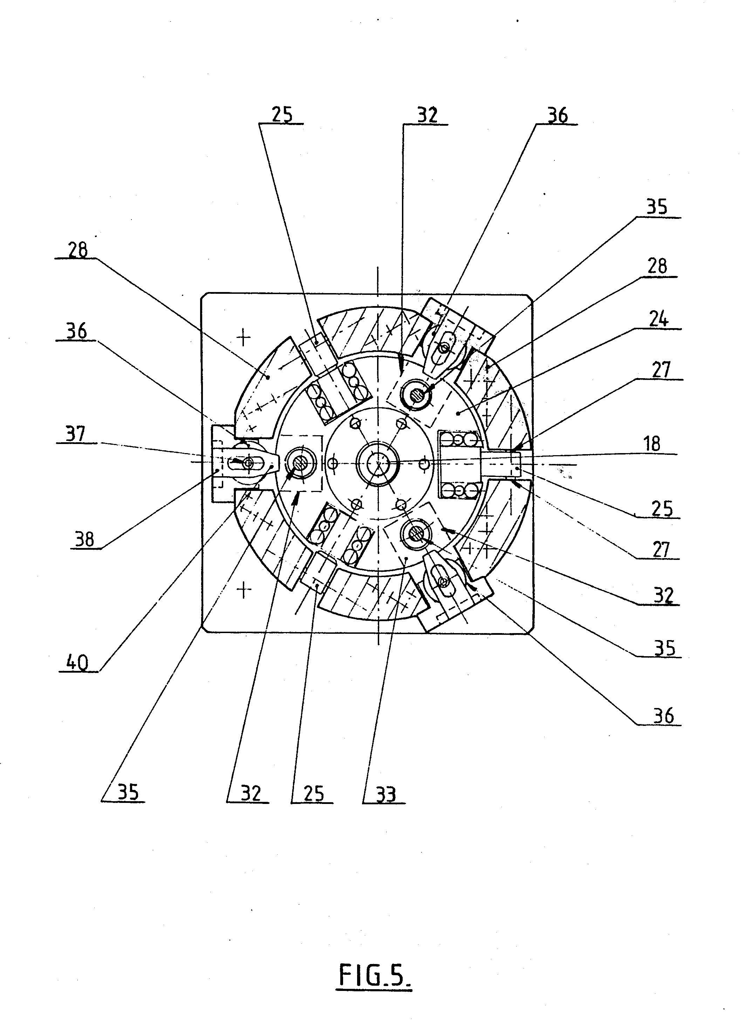

Chaque faisceau est reçu et renvoyé par une bande catadioptrique 15 (Fig. 4,5) fixée sur une plaque support 16 solidaire de la tête de mesure 7, à l'extrémité inférieure du bras. Les quatre tronçons de bande 15 affectés à chaque face du bras 6 forment un contour polygonal continu, carré dans le mode de réalisation représenté (Fig. 5).

Les faisceaux retour sont reçus et détectés par les dispositifs émetteurs 13 sur un récepteur approprié. Ces derniers sont des dispositifs biens connus en eux mêmes et n'ont pas besoin d'être décrits plus en détails. Ils sont constitués par exemple à partir de barrières optiques de sécurité modèles LVU construites et vendues par la Société SICK FRANCE.

Les dispositifs 13 sont reliés au poste de contrôle et commande du banc et sont chargés, comme on le verra plus loin, de détecter toute interruption de l'un quelconque des quatre rideaux optiques et de commander un processus prédéterminé de décélération du déplacement du bras 6 et d'arrêt de ce dernier, voire de retour éventuel en arrière à des fins de dégagement.

La tête de mesure 7 est par exemple une tête à cinq topeurs dont un vertical et quatre cardinaux.

Ce type de tête est bien connu et peut être constitué par le modèle TP2 construit et vendu par la Société RENISHAW.

La tête 7 est fixée de manière amovible à l'extrémité d'un tube 17 coaxial au bras 6, suspendu à ce dernier par l'intermédiaire d'un ressort 18 et susceptible de coulisser dans un manchon 19 de part et d'autre duquel sont fixés deux pinces pneumatiques 20 de serrage par l'intermédiaire de cônes fendus du tube 17 en vue d'immobiliser ce dernier par rapport au manchon 19.

De tels dispositifs de serrage pneumatiques sont bien connus et n'on pas besoin d'être décrits en détails.

Les dispositifs 20 sont alimentés en air comprimé par l'intermédiaire de raccords 21 reliés à une source appropriée par l'intermédiaire de conduits souples (non représentés).

Sur le manchon 19 est fixée la plaque 16 portant les bandes catadioptriques 15 ainsi que le support d'une prise 22 permettant de relier les capteurs de la tête 7 au système de commande et de contrôle du banc par l'intermédiaire de cordons souples 23.

Le corps 24 du dispositif de serrage pneumatique 20 supérieur (immédiatement en regard de l'extrémité du bras 6) est conformé de façon à recevoir trois tourillons horizontaux 25 disposés radialement à égale distance angulairement les uns des autres.

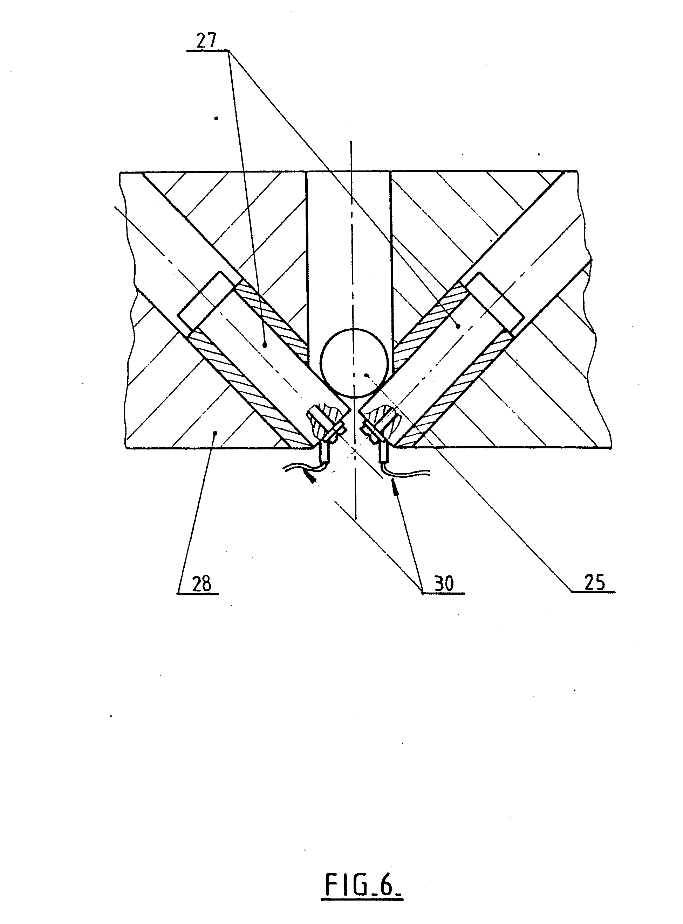

Une cale isolante 26 est interposée entre chaque tourillon 25 et son support 24. En outre, les tourillons 25 font saillie radialement vers l'extérieur et sont susceptibles de reposer chacun dans un berceau en V (Fig. 6) constitué par deux plots électriques inclinés 27.

Les paires de plots 27 sont portées par une couronne 28 solidaire d'une plaque de reprise 29 fixée sur l'extrémité du bras 6.

Les deux plots en V 27 de réception de chaque tourillon 25 sont isolés électriquement de leur couronne support 28 et ne se touchent pas. Les deux plots 27 sont reliés par des conducteurs électriques 30 au poste de commande du banc. La continuité électrique entre les deux plots 27 est assurée par le pontage réalisé par le tourillon 25.

Le corps 24 est suspendu à la plaque 29, c'est-à-dire au bras 6 par l'intermédiaire de trois ressorts 31 verticaux régulièrement espacés dans les intervalles entre les tourillons 25 (Fig. 5). Ces ressorts 31 travaillant à la compression, sont logés dans des évidements 32 du corps 24 et interposés entre le fond 33 des évidements et des rondelles 34 retenues à l'extrémité de tiges verticales 35 ancrées dans ladite plaque 29. Les ressorts 31 sont chargés d'équilibrer la masse de la tête de mesure de façon que la pression des tourillons 25 sur les berceaux en V 27 soit sensiblement égale à zéro.

La couronne 28 porte trois électro-aimants 36 disposés à l'opposé de chaque tourillon 25 par rapport à l'axe du bras 6.

Chaque électro-aimant 36 commande un poussoir 37 mobile verticalement et commandant lui-même une bride 38 montée pivotante autour d'un axe horizontal 39 et dont l'extrémité 40 en forme de bec est susceptible de prendre appui contre la face supérieure du corps 24. Un ressort 41 ancré, d'une part, sur la plaque 29 et, d'autre part, sur la bride 38 est chargé de conférer, comme on le verra en détails plus loin, la raideur désirée à l'ensemble 7-19-24-28 lorsque l'électro-aimant 36 est excité.

Le poids du bras 6 et de l'ensemble de la tête de mesure et de son montage est partiellement compensé ou équilibré par un dispositif comprenant deux câbles 42 ancrés à une extrémité de part et d'autre du bras 6, à sa partie inférieure (Fig. 1), et, à l'autre extrémité, sur deux tambours jumelés 43 (Fig. 7) d'axe horizontal, montés à la partie supérieure du chariot 5 sur un châssis approprié 44. Les câbles 42 à la sortie des tambours 43 sont mis dans l'axe correct par l'intermédiaire d'une première paire de poulies de renvoi 45, puis d'une seconde paire de poulies de renvoi 46.

Une poulie réducteur à train épicycloïdal 47 est interposée entre les deux tambours 43. L'arbre 48 de la poulie réducteur 47 traverse les deux tambours 43 et sur ses deux extrémités sont clavetées deux poulies 49 de grand diamètre. Sur les poulies 49 sont ancrées les extrémités de deux câbles 50 dont les autres extrémités, après passage sur une poulie de renvoi d'angle 51, sont ancrées sur les extrémités de deux tiges 52 (Fig. 1) de deux vérins pneumatiques 53 horizontaux, parallèles aux poutres 4 et fixés au châssis 44.

Un frein hydraulique à disque 54 de sécurité est prévu en cas de manque d'air dans les vérins 53, le frein 54

- 7 -                    0116807

bloquant toute rotation de l'arbre 48 en cas de nécessité.

Le fonctionnement des dispositifs représentés et décrits ci-dessus est le suivant.

La tête de mesure 7 est capable de se déplacer suivant l'un quelconque des trois axes de référence, X horizontal par déplacement des poutres 4 le long des poutres 3, Y horizontal par déplacement du chariot 5 le long des poutres 4 et Z vertical par déplacement du coulisseau 6 sur le chariot 5, en vue de procéder à toute mesure ou contrôle d'une pièce quelconque préalablement positionnée et arrimée sur le plateau tournant 8.

Le manchon optique 14 enveloppant la partie du bras 6 en dessous du chariot 5 assure une protection des palpeurs de la tête de mesure et éventuellement de la pièce à contrôler en cas d'interruption de l'un des faisceaux de balayage émis par les dispositifs 13 et renvoyés par les bandes 15 sur ces mêmes dispositifs 13.

Une telle interruption peut se produire par exemple si, au cours du déplacement dans l'espace de la tête 7, un corps étranger, un obstacle ou un élément de la pièce elle-même pénètre dans l'un ou plusieurs des quatre rideaux optiques constituant le manchon protecteur 14. Une telle pénétration perturbe la réception en 13 du faisceau de retour et est détectée. Le signal de détection est utilisé pour arrêter le déplacement de la tête de mesure 7 de préférence après une décélération prédéterminée.

Si le banc de mesure est commandé par un système informatique, l'ordinateur du système peut faire la sélection de celui des quatre rideaux concerné en vue, après arrêt de la tête 7, de commander un retrait de cette dernière à l'opposé du rideau optique perturbé pour écarter la tête 7 de l'intrus. L'ordinateur peut également prévoir un arrêt définitif de la tête 7 si la manoeuvre de retrait pour échapper audit intrus n'a pas permis, dans un délai prédéterminé, de supprimer la perturbation dudit rideau optique concerné.

Il est à noter que la barrière optique 14 est toujours en service même si les bandes réfléchissantes 15 ne se trouvent plus strictement perpendiculaires aux faisceaux incidents du fait de leur structure catadioptrique.

Sur la Fig. 1 on a représenté en tiretés en 6' l'extension maximale vers le bas du coulisseau 6. Dans cette position, la totalité du bras 6 en dessous du chariot 5 demeure enveloppée par le manchon optique protecteur 14 et ce bien entendu quelle que soit la position du chariot 5 dans les axes horizontaux X et Y.

La barrière 14 s'ajuste automatiquement à la manière télescopique à la longueur de coulisseau 6 dépassant en dessous du chariot 5.

Cette première protection par barrière optique est complétée par le montage flottant à raideur contrôlée et modifiable de la tête de mesure 7.

Au cours du topage des palpeurs de mesure (accostage de la pièce par le palpeur) la tête de mesure 7 doit conserver une certaine raideur vis-à-vis du bras 6. Cette raideur est fixée par les conditions de mesure imposées et contrôlées par l'ordinateur du banc et est assurée par les trois électro-aimants 36 normalement excités en sorte que les becs 40 verrouillent le corps 24 comme représenté sur la Fig. 4. Par suite l'ensemble 7-19-24 fait bloc avec la couronne 28 et donc la plaque 29, avec toutefois une possibilité de mouvement pendulaire dudit ensemble à l'encontre des ressorts 41 qui confèrent donc à cet ensemble la raideur désirée. Les ressorts 41 compensent par ailleurs les forces d'inertie lors de l'accélération dans le plan XY du bras 6.

Si, pour une raison ou une autre, un effort transversal exercé sur l'ensemble 7-19-24 surmonte la raideur prédéterminée imposée par les ressorts 41, l'axe de l'ensemble 7-17 ne reste plus coaxial à l'axe du bras 6. Il s'ensuit un décollement de l'un des tourillons 25 de son berceau 27, suivant l'endroit d'application dudit effort transversal.

Le décollement du tourillon 25 engendre une solution de continuité électrique entre les deux plots 27 en regard. Cette solution de continuité génère un signal utilisé pour, d'une part, commander l'arrêt de la tête 7 et, d'autre part, commander la désexcitation des trois électro-aimants 36.

Les brides 38 sont alors relâchées et libèrent l'ensemble 7-19-24 qui retrouve sa grande sensibilité aux déplacement pendulaires, permettant par la suite à la tête 7 de revenir en bonne position en s'écartant de l'intrus.

L'ordinateur détermine celui des trois tourillons 25 qui s'est décollé et commande et contrôle le déplacement de retrait de la tête 7, du côté du tourillon sollicité. Au cours de ce déplacement, l'extrême sensibilité et la précision de l'ensemble flottant 7-19-24 fait que le moindre accostage fortuit dudit ensemble avec la pièce à mesurer par exemple est immédiatement détecté par le décollement de l'un des tourillons 25, le signal généré étant exploité par l'ordinateur pour rectifier la trajectoire suivant un programme pré-établi.

Dès le retour en position opérationnelle, les électro-aimants 36 sont reverrouillés en vue de poursuivre le programme de mesure-contrôle toujours sous la direction de l'ordinateur.

Le dispositif constitué par les deux pinces pneumatiques 20, le tube 17 et le ressort 18 permet d'équilibrer les palpeurs de mesure quelle que soit leur configuration.

Lors d'un changement de la tête de mesure on déverrouille les deux pinces 20, le tube 17 restant en suspension libre au ressort 18. La tête de mesure 7 est enlevée et remplacée par une autre d'un poids différent ce qui provoque l'allongement ou le raccourcissement du ressort 18. Dans cette position de nouvel équilibre les pinces 20 sont reserrées et la tête de mesure est prête à fonctionner.

Les ressorts 31 peuvent être réglés en tension grâce à un écrou vissé sur la tige 35 et retenant la rondelle 34 en vue d'équilibrer le poids de l'ensemble 7-19-24 de manière que la pression normale exercée par les tourillons 25 sur leur berceau 27 soit nulle, les tourillons 25 contactant cependant les plots 27 pour assurer la continuité électrique.

Le dispositif d'équilibrage 42 à 53 permet de compenser au moins partiellement le poids de l'ensemble 6-7. Par exemple 90% du poids est contrebalancé automatiquement et en permanence quelle que soit la position du coulisseau 6 par rapport au chariot 5 et les 10% restant sont déplacés par l'intermédiaire du moteur 12, du pignon 11 et de la crémaillère 10.

La course maximale du coulisseau 6 pouvant être relativement grande (3m par exemple) le système réducteur-démultiplicateur 43-49-50-51 permet aux câbles 42 de se dérouler sur la longueur désirée pour une course réduite (par exemple un mètre) des tiges 52 des vérins 53 de commande du déroulement-enroulement des câbles 42 sur les tambours 43.

L'invention a été décrite dans le cadre de l'application à un banc de mesure tridimensionnelle, de préférence à commande informatisée, mais il est bien évident qu'elle pourrait tout aussi bien s'appliquer à un coulisseau mobile verticalement sur un support lui-même mobile suivant au moins un axe horizontal, ledit coulisseau portant à sa partie inférieure une tête active susceptible d'effectuer une mesure, un contrôle, une surveillance (par exemple par caméra), un usinage, une fonction de préhension (robot) et d'une manière générale une fonction quelconque l'appelant à se déplacer dans l'espace relativement à un ou des objets quelconques tout en assurant la protection et la sécurité, d'une part, de ladite tête et de son bras-support et, d'autre part, du ou des objets considérés.

Enfin, l'invention n'est évidemment pas limitée au mode de réalisation représenté et décrit ci-dessus mais en couvre au contraire toutes les variantes, notamment en ce qui concerne la configuration de la barrière optique 14 enveloppant le bras 6, les moyens de sa réalisation, les moyens de suspension élastique à raideur contrôlée de la tête de mesure 7, les moyens de contrôle de tout écart angulaire entre l'axe du bras 6 et l'axe du support tubulaire 17 de la tête 7 ou encore les moyens d'équilibrage du poids de l'ensemble coulisseau 6-tête de mesure 7.

R E V E N D I C A T I O N S
:=:=:=:=:=:=:=:=:=:=:=:=:=:

1. Coulisseau monté mobile suivant un premier axe vertical sur un chariot porteur mobile suivant au moins un second axe orthogonal au premier et portant une tête de mesure, contrôle, usinage, préhension ou analogue, caractérisé en ce qu'il comporte une barrière optique (14) enveloppant tout ou partie de la périphérie du bras (6) constituant ledit coulisseau et constituée d'une source de lumière visible ou invisible (13) solidaire du chariot (5), d'une surface catadioptrique (15) de conformation appropriée, fixée sur l'extrémité du bras (6) portant la tête active (7) et de moyens récepteurs du rayonnement réfléchi par ladite surface catadioptrique (15) en sorte d'envelopper totalement ou partiellement le bras de faisceaux électromagnétiques dont le franchissement par un objet quelconque est automatiquement détecté en vue de commander l'arrêt du déplacement dans l'espace du coulisseau (6).

2. Coulisseau suivant la revendication 1, caractérisé en ce que ladite barrière optique (14) est formée à partir d'un rayonnement infra-rouge pulsé, enveloppant totalement le bras (6) en présentant un contour polygonal et est constitué de rideaux plans étroits s'étendant chacun sur une largeur déterminée, ladite surface catadioptrique étant constituée de tronçons de bandes réfléchissantes (15) délimitant un contour polygonal correspondant, cependant que lesdits moyens récepteurs sont solidaires de la ou les sources laser (13) et à proximité immédiate de celles-ci.

3. Coulisseau suivant la revendication 1 ou 2, caractérisé en ce que lesdites bandes réfléchissantes catadioptriques (15) sont fixées sur une plaque (16) solidaire d'une pièce (19) portant la tête de mesure (7), suspendue oscillante à l'extrémité dudit bras (6) et sur laquelle sont rapportés des tourillons (25) disposés horizontalement et radialement en étoile, et susceptibles de coopérer chacun avec un organe de contact fixe (27) solidaire du bras (6), des moyens (31,35) étant prévus pour régler la suspension pendulaire de l'ensemble (7-19-24) de façon que lors de la coaxialité dudit ensemble et du bras (6), lesdits tourillons (25) soient tous en contact avec leur organe (27) associé, avec une pression nulle ou très faible et que la rupture de ladite coaxialité entraîne la rupture du contact entre au moins l'un desdits tourillons (25) et son organe coopérant fixe (27), ladite rupture générant un signal de commande d'arrêt du déplacement dans l'espace du coulisseau (6).

4. Coulisseau s u i v a n t la r e v e n d i c a t i o n 3, caractérisé en ce que ledit organe coopérant fixe est constitué par un berceau en forme de V formé par deux plots (27) électriquement conducteurs, distants l'un de l'autre mais susceptibles d'être pontés par l'intermédiaire dudit tourillon (25).

5. Coulisseau suivant la revendication 3 ou 4, caractérisé en ce que lesdits moyens de réglage de la suspension pendulaire de l'ensemble (7-19-24) sont constitués par des ressorts de suspension verticaux (31) interposés entre ledit ensemble et l'extrémité du coulisseau (6) et angulairement régulièrement espacés autour de l'axe dudit ensemble (7-19-24), la tension de chaque ressort (31) étant réglable individuellement.

6. Coulisseau suivant l'une des revendications 3 à 5, caractérisé en ce qu'entre ledit ensemble (7-19-24) et le bras (6) est interposé un dispositif (36 à 40) de verrouillage élastique dudit ensemble conférant à ce dernier une certaine raideur et n'autorisant un désalignement entre l'axe du coulisseau (6) et l'axe dudit ensemble (7-19-24) que sous un effort transversal communiqué à l'ensemble supérieur à un seuil prédéterminé.

7. Coulisseau suivant la revendication 6, caractérisé en ce que ledit dispositif de verrouillage est constitué par une série d'électro-aimants (36) portés par une couronne (28) solidaire du bras (6) et entourant ledit ensemble (7-19-24), chaque électro-aimant (36) actionnant une bride de verrouillage (38) coopérant avec ledit ensemble et permettant de relier ce dernier au bras (6) par l'intermédiaire de ressorts compensateurs (41) conférant à l'ensemble (7-19-24) une raideur prédéterminée, lesdits électro-aimants (36) étant commandés à partir du signal de rupture du contact entre l'un quelconque desdits tourillons (25) et son organe coopérant fixe (27).

8. Coulisseau suivant l'une des revendications 3 à 7, caractérisé en ce que la tête de mesure (7) est montée amovible à l'extrémité d'un tube support (17) monté coulissant dans ladite pièce (19) et suspendu par un ressort (18) à l'extrémité du bras (6), coaxialement à ce dernier, ladite pièce (19) étant munie d'au moins un dispositif de blocage dudit tube support (17) vis-à-vis de la pièce (19).

9. Coulisseau suivant l'une des revendications 1 à 8, caractérisé en ce que ledit bras (6) est constitué d'un bloc parallèlèpipèdique en granit muni sur ses faces latérales de rails de guidage (9) coopérant avec des patins de guidage portés par le chariot (5) et est équipé d'un dispositif d'équilibrage au moins partiel du poids de l'ensemble bras (6) - tête de mesure (7) constitué de deux câbles latéraux (42) ancrés à une extrémité à la partie inférieure dudit bras et à l'autre extrémité sur deux tambours (43) portés par le chariot (5), un système de poulies (45,46) de renvoi d'angle positionnant correctement lesdits câbles (42) le long du bras, de part et d'autre de celui-ci.

10. Coulisseau suivant la revendication 9, caractérisé en ce que lesdits tambours (43) sont commandés par une poulie réducteur à train épicycloïdal (47) dont l'arbre central (48) est claveté aux extrémités sur deux poulies (49) entraînées en rotation à partir de vérins (53) portés par le chariot (5), par l'intermédiaire d'un système à câble (50) et poulie démultiplicatrice (51).

FIG.1.

0116807

FIG.2

FIG.3.

3/7

0116807

FIG_4_

0116807

FIG.5.

0116807

FIG.6.

FIG 7

0116807

Office européen
des brevets

**RAPPORT DE RECHERCHE EUROPEENNE**

EP 83 45 0003

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | GB-A-2 060 113 (UNIVERSAL MASCHINENFABRIK DR. RUDOLF SCHIEBER GmbH.) * Figures 1,2,3; page 1, ligne 98 - page 2, ligne 61 * | 1,2 | G 01 B 21/04 G 01 B 3/00 F 16 P 3/14 B 23 Q 5/58 |
| | --- | | |
| Y | EP-A-0 070 108 (THE RANK ORGANISATION LTD.) * Figures 1,2; page 4, ligne 13 - page 5, ligne 21 * | 3,4 | |
| | --- | | |
| Y | GB-A-2 025 073 (ROLLS ROYCE LTD.) * Figures 1-3; page 1, lignes 68-115 * | 3,4 | |
| | --- | | |
| A | FR-A-2 141 051 (VEB CARL ZEISS JENA) * Figures 1,2,3,4; page 3, ligne 13 - page 7, ligne 14 * | 3,4,5 | DOMAINES TECHNIQUES RECHERCHES (Int. Cl. 3) |
| | --- | | G 01 B G 12 B |
| A | US-A-3 122 970 (J.M. RHOADES) * Figures 1,2,3,4,5; colonne 1, ligne 68 - colonne 6, ligne 34 * | 6,7 | F 16 P B 23 Q |
| | --- | | |
| A | US-A-4 136 455 (P.J. OWSEN) * Figures 7,8; titre; colonne 7, ligne 23 - colonne 8, ligne 4 * | 9,10 | |
| | --- -/- | | |

Le présent rapport de recherche a été établi pour toutes les revendications

| Lieu de la recherche LA HAYE | Date d'achèvement de la recherche 25-10-1983 | Examinateur VISSER F.P.C. |
|---|---|---|

CATEGORIE DES DOCUMENTS CITES

X : particulièrement pertinent à lui.seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82

**0116807**

Numéro de la demande

Office européen
des brevets

**RAPPORT DE RECHERCHE EUROPEENNE**

EP 83 45 0003

| | DOCUMENTS CONSIDERES COMME PERTINENTS | | Page 2 | |
|---|---|---|---|---|
| Catégorie | Citation du document avec indication, en cas de besoin, des parties pertinentes | Revendication concernée | CLASSEMENT DE LA DEMANDE (Int. Cl. ³) | |
| A | FR-A-2 303 267 (C. STIEFELMAYER KG.) <br> * Figures 2,6; page 25, ligne 39 - page 26, ligne 19; page 30, ligne 22 - page 31, ligne 12 * <br><br> ----- | 5 | | |
| | | | DOMAINES TECHNIQUES RECHERCHES (Int. Cl. ³) | |

Le présent rapport de recherche a été établi pour toutes les revendications

| Lieu de la recherche <br> LA HAYE | Date d'achèvement de la recherche <br> 25-10-1983 | Examinateur <br> VISSER F.P.C. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82